# EUROPÄISCHE PATENTSCHRIFT

(11) **EP 3 108 573 B1**
(45) Veröffentlichungstag und Bekanntmachung des Hinweises auf die Patenterteilung: **26.02.2020**
(21) Anmeldenummer: 14818974.9
(22) Anmeldetag: 18.12.2014
(51) Int. Cl.: F16C 27/02, F16C 27/08, H02K 5/16, H02K 5/24, H02K 5/167

(54) **DÄMPFUNGSEINHEIT**
DAMPING UNIT
DISPOSITIF D'AFFAIBLISSEMENT

(30) Priorität: 19.02.2014 DE 102014102134
(43) Veröffentlichungstag der Anmeldung: 28.12.2016
(73) Patentinhaber: Robert Bosch GmbH, 70839 Gerlingen-Schillerhöhe (DE)
(72) Erfinder: WINKLER, Wolfgang, 77746 Schutterwald (DE); VEREIJKEN, Hans, NL-5712 Someren-Eind (NL)
(86) Internationale Anmeldenummer: PCT/EP2014/078535
(87) Internationale Veröffentlichungsnummer: WO 2015/124238

(56) Entgegenhaltungen:
- WO-A2-2010/075844
- WO-A2-2012/156132

## Beschreibung

### Stand der Technik

Aus WO 2012/156132 A2 ist bereits eine Dämpfungseinheit mit zumindest einem Anlaufelement bekannt, das zu einer Dämpfung zumindest einer Ankerlängsschwingung eines Elektromotors in zumindest einem Betriebszustand vorgesehen ist, und das zumindest einen Hohlraum zu einer Dämpfung der zumindest einen Ankerlängsschwingung des Elektromotors in zumindest einem Betriebszustand und zumindest ein erstes Spritzgusselement und zumindest ein zweites Spritzgusselement aufweist, wobei der zumindest eine Hohlraum zumindest im Wesentlichen in dem zumindest einen ersten Spritzgusselement oder in dem zumindest einen zweiten Spritzgusselement angeordnet ist.

### Offenbarung der Erfindung

Die Erfindung geht aus von einer Dämpfungseinheit wie im unabhängigen Anspruch 1 beschrieben, mit zumindest einem Anlaufelement, das zu einer Dämpfung zumindest einer Ankerlängsschwingung eines Elektromotors in zumindest einem Betriebszustand vorgesehen ist, und das einen elastisch verformbaren Hohlraum zu einer Dämpfung der zumindest einen Ankerlängsschwingung des Elektromotors in zumindest einem Betriebszustand und ein erstes Spritzgusselement und ein zweites Spritzgusselement aufweist, wobei der eine Hohlraum in dem ersten Spritzgusselement oder in dem zweiten Spritzgusselement angeordnet ist.

Es wird vorgeschlagen, dass das zumindest eine Anlaufelement zumindest ein Verzahnungselement umfasst, das zumindest teilweise zu einer formschlüssigen Kopplung zwischen dem einen ersten Spritzgusselement und dem einen zweiten Spritzgusselement vorgesehen ist. Unter einer "formschlüssigen Kopplung" soll in diesem Zusammenhang insbesondere verstanden werden, dass aneinanderliegende Flächen der miteinander formschlüssig verbundenen Bauteile eine in Normalenrichtung der Flächen wirkende Haltekraft aufeinander ausüben. Insbesondere befinden sich das eine erste Spritzgusselement und das eine zweite Spritzgusselement in einem geometrischen Eingriff miteinander. Dadurch kann auf vorteilhaft einfache Weise eine bevorzugt sichere und zuverlässige Verbindung zwischen dem einen ersten Spritzgusselement und dem einen zweiten Spritzgusselement erreicht werden. Das zumindest eine Anlaufelement ist vorzugsweise zumindest teilweise als Anlaufscheibe ausgebildet. Es sind jedoch auch andere, einem Fachmann als sinnvoll erscheinende Ausgestaltungen des zumindest einen Anlaufelements denkbar. Unter einer "Dämpfung" soll in diesem Zusammenhang insbesondere verstanden werden, dass das zumindest eine Anlaufelement und/oder der eine Hohlraum dazu vorgesehen sind/ist, Vibrationen und/oder Schwingungen in Form einer Bewegungsenergie in Wärmeenergie umzuwandeln und somit insbesondere eine Schwingungsübertragung zwischen dem Elektromotor und zumindest einem Gehäuse eines Heiz- und/oder Klimagebläses, das den Elektromotor umfasst, in einem Betriebszustand zu verringern bzw. zu dämpfen. Das zumindest eine Anlaufelement weist, insbesondere in einem an den zumindest einen Hohlraum angrenzenden Bereich, vorzugsweise ein Elastizitätsmodul auf, das kleiner ist als 500 N/mm², bevorzugt kleiner als 100 N/mm² und besonders bevorzugt kleiner als 50 N/mm². Das zumindest eine Anlaufelement ist, insbesondere in einem an den zumindest einen Hohlraum angrenzenden Bereich, insbesondere um mehr als 0,1 mm, bevorzugt um mehr als 0,5 mm und besonders bevorzugt um mehr als 1 mm elastisch komprimierbar.

Unter einer "Ankerlängsschwingung" soll in diesem Zusammenhang insbesondere eine, insbesondere oszillierende, Bewegung eines Ankerelements des Elektromotors verstanden werden, die zumindest eine Komponente aufweist, die parallel zu einer Rotationsachse des Elektromotors angeordnet ist. Die Ankerlängsschwingung entsteht vorzugsweise in einem Betriebszustand des Elektromotors. Das Ankerelement des Elektromotors ist vorzugsweise drehbar gelagert und in einem Betriebszustand des Elektromotors, insbesondere relativ zu einer Statoreinheit, rotierend antreibbar ausgebildet. Unter "vorgesehen" soll insbesondere speziell ausgestaltet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Hohlraum" soll in diesem Zusammenhang insbesondere ein räumlicher, insbesondere immaterieller, Bereich des zumindest einen Anlaufelements verstanden werden, der von dem zumindest einen Anlaufelement zumindest nahezu vollständig umschlossen und von einer Grundporosität eines Materials oder Materialgemischs des zumindest einen Anlaufelements verschieden ausgebildet ist. Der eine Hohlraum weist eine Haupterstreckung auf, die insbesondere zumindest doppelt, vorzugsweise zumindest dreimal, bevorzugt zumindest fünfmal und besonders bevorzugt zumindest zehnmal so groß ist, wie eine durchschnittliche Porengröße der Grundporosität eines Materials oder Materialgemischs des zumindest einen Anlaufelements. Die Haupterstreckung des einen Hohlraums beträgt insbesondere zumindest 1 mm, vorzugsweise zumindest 5 mm, bevorzugt zumindest 1 cm und besonders bevorzugt zumindest 5 cm.

Unter einem "Spritzgusselement" soll in diesem Zusammenhang insbesondere ein Element verstanden werden, das zumindest teilweise, vorzugsweise zumindest nahezu vollständig in einem Spritzgussverfahren hergestellt und/oder geformt ist. Das Spritzgusselement ist vorzugsweise zumindest teilweise, vorzugsweise zumindest nahezu vollständig aus zumindest einem Kunststoff gebildet.

Unter "zumindest im Wesentlichen in einem Element angeordnet" soll in diesem Zusammenhang insbesondere verstanden werden, dass der zumindest eine Hohlraum insbesondere zu zumindest 50 %, vorzugsweise zu zumindest 70 %, bevorzugt zu zumindest 90 % und besonders bevorzugt zu zumindest 98 % von dem Material oder Materialgemisch des zumindest einen Anlaufelements, insbesondere in zumindest zwei Raumrichtungen, vorzugsweise in drei Raumrichtungen betrachtet, umschlossen ist.

Durch die erfindungsgemäße Ausgestaltung der Dämpfungseinheit können auf vorteilhaft einfache Weise eine Ankerlängsschwingung des Ankerelements des Elektromotors in einem Betriebszustand gedämpft und Laufgeräusche des Elektromotors reduziert werden.

Ferner wird vorgeschlagen, dass der zumindest eine Hohlraum zumindest teilweise entlang einer Umfangsrichtung des Anlaufelements angeordnet ist. Unter "entlang einer Umfangsrichtung" soll in diesem Zusammenhang insbesondere verstanden werden, dass sich eine Haupterstreckung des zumindest einen Hohlraums zumindest zu einem Großteil zumindest nahezu parallel zu der Umfangsrichtung des zumindest einen Anlaufelements angeordnet ist. Dadurch kann eine vorteilhaft kompakte Ausgestaltung des zumindest einen Anlaufelements erreicht werden.

Des Weiteren wird vorgeschlagen, dass der zumindest eine Hohlraum zumindest teilweise ringförmig ausgebildet ist. Unter "ringförmig" soll in diesem Zusammenhang insbesondere verstanden werden, dass der zumindest eine Hohlraum einen Querschnitt in einer Ebene, die parallel zur Haupterstreckung des zumindest einen Hohlraums verläuft, aufweist, der eine kreisringförmige Kontur aufweist. Dadurch kann eine konstruktiv einfache und bevorzugt kostengünstige Ausgestaltung des zumindest einen Anlaufelements erreicht werden.

Zudem wird vorgeschlagen, dass die Dämpfungseinheit zumindest zwei Anlaufelemente umfasst, die zu einer Dämpfung zumindest einer Ankerlängsschwingung eines Elektromotors in zumindest einem Betriebszustand vorgesehen sind. Dadurch kann auf vorteilhaft einfache Weise eine bevorzugt effektive Dämpfung der Ankerlängsschwingung des Elektromotors in zumindest einem Betriebszustand erreicht werden.

Zudem wird vorgeschlagen, dass das zumindest eine erste Spritzgusselement und das zumindest eine zweite Spritzgusselement zumindest teilweise fest miteinander verbunden sind. Unter "fest verbunden" soll in diesem Zusammenhang insbesondere verstanden werden, dass das zumindest eine erste Spritzgusselement und das zumindest eine zweite Spritzgusselement insbesondere verliersicher, vorzugsweise unlösbar bzw. nur durch eine Zerstörung trennbar, miteinander verbunden sind. Das zumindest eine erste Spritzgusselement und das zumindest eine zweite Spritzgusselement können zumindest teilweise form-und/oder kraftschlüssig miteinander verbunden sein, wobei eine Haltekraft zwischen dem zumindest einen ersten Spritzgusselement und dem zumindest einen zweiten Spritzgusselement vorzugsweise durch einen geometrischen Eingriff der Bauteile ineinander und/oder eine Reibkraft zwischen den Bauteilen übertragen wird. In einem besonders bevorzugten Ausführungsbeispiel sind das zumindest eine erste Spritzgusselement und das zumindest eine zweite Spritzgusselement zumindest teilweise stoffschlüssig miteinander verbunden. Unter "stoffschlüssig verbunden" soll insbesondere verstanden werden, dass das zumindest eine erste Spritzgusselement und das zumindest eine zweite Spritzgusselement durch atomare oder molekulare Kräfte zusammengehalten werden, wie beispielsweise beim Löten, Schweißen, Kleben und/oder Vulkanisieren. Dadurch kann eine vorteilhaft robuste und bevorzugt zuverlässige Ausgestaltung des zumindest einen Anlaufelements erreicht werden.

Ferner wird vorgeschlagen, dass das zumindest eine erste Spritzgusselement und das zumindest eine zweite Spritzgusselement zumindest teilweise einstückig ausgebildet sind. Unter "einstückig" soll in diesem Zusammenhang insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise sind das zumindest eine erste Spritzgusselement und das zumindest eine zweite Spritzgusselement zumindest teilweise in einem, insbesondere mehrstufigen, Spritzgussverfahren hergestellt. Dadurch kann eine vorteilhaft einfache Ausgestaltung des zumindest einen Anlaufelements erreicht werden.

Des Weiteren wird vorgeschlagen, dass das zumindest eine Anlaufelement zumindest einen ultraschallbearbeiteten Kontaktbereich zwischen dem zumindest einen ersten Spritzgusselement und dem zumindest einen zweiten Spritzgusselement umfasst. Unter einem "Kontaktbereich" soll in diesem Zusammenhang insbesondere ein Bereich verstanden werden, in dem sich das zumindest eine erste Spritzgusselement und das zumindest eine zweite Spritzgusselement direkt kontaktieren und in dem das zumindest eine erste Spritzgusselement und das zumindest eine zweite Spritzgusselement vorzugsweise verbunden sind. Unter "ultraschallbearbeitet" soll in diesem Zusammenhang insbesondere verstanden werden, dass der Kontaktbereich zumindest teilweise mittels eines Ultraschallverfahrens, insbesondere mittels eines Ultraschallschweißverfahrens, insbesondere zur Erhöhung einer Adhäsion zwischen dem zumindest einen ersten Spritzgusselement und dem zumindest einen zweiten Spritzgusselement in dem Kontaktbereich bearbeitet ist. Alternativ oder zusätzlich sind jedoch auch andere, einem Fachmann als sinnvoll erscheinende Verfahren zur Erhöhung der Adhäsion zwischen dem zumindest einen ersten Spritzgusselement und dem zumindest einen zweiten Spritzgusselement in dem Kontaktbereich denkbar. Dadurch kann auf vorteilhaft einfache Weise eine bevorzugt sichere und zuverlässige Verbindung zwischen dem zumindest einen ersten Spritzgusselement und dem zumindest einen zweiten Spritzgusselement erreicht werden.

Ferner wird vorgeschlagen, dass der zumindest eine Hohlraum zumindest in einem montierten Zustand zumindest im Wesentlichen luftdicht ausgebildet ist. Unter "zumindest im Wesentlichen luftdicht" soll in diesem Zusammenhang insbesondere verstanden werden, dass ein Fluidaustausch, insbesondere ein Luftaustausch, zwischen dem zumindest einen Hohlraum und einer Umgebung des zumindest einen Anlaufelements insbesondere weniger als 0,1 l/h, vorzugsweise weniger als 0,05 l/h, bevorzugt weniger als 0,01 l/h und besonders bevorzugt weniger als 0,001 l/h beträgt. Dadurch können ein Fluidpolster, insbesondere ein Luftpolster innerhalb des zumindest einen Hohlraums und somit bevorzugt gute Dämpfungseigenschaften des zumindest einen Anlaufelements erreicht werden.

Zudem wird vorgeschlagen, dass das zumindest eine erste Spritzgusselement und das zumindest eine zweite Spritzgusselement zumindest teilweise aus einem gleichen Material gebildet sind. Dadurch können eine konstruktiv einfache und bevorzugt kostengünstige Ausgestaltung des zumindest einen Anlaufelements erreicht werden.

Des Weiteren wird vorgeschlagen, dass das zumindest eine Verzahnungselement zumindest teilweise einstückig mit dem zumindest einen ersten Spritzgusselement oder dem zumindest einen zweiten Spritzgusselement ausgebildet ist. Unter "einstückig" soll in diesem Zusammenhang insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise sind das zumindest eine Verzahnungselement und das zumindest eine erste Spritzgusselement oder das zumindest eine zweite Spritzgusselement zumindest teilweise in einem Spritzgussverfahren hergestellt. Dadurch kann eine vorteilhaft einfache Ausgestaltung des zumindest einen Anlaufelements erreicht werden.

Zudem wird ein Elektromotor mit zumindest einer Ankerwelle, mit zumindest einem Ankerelement, mit zumindest einem Kommutator, mit zumindest einem ersten Lagerelement und zumindest einem zweiten Lagerelement und mit der Dämpfungseinheit, die auf der Ankerwelle zumindest teilweise zwischen dem zumindest einen ersten Lagerelement und dem zumindest einen Ankerelement und/oder zumindest teilweise zwischen dem zumindest einen Kommutator und dem zumindest einen zweiten Lagerelement angeordnet ist, vorgeschlagen. Das zumindest eine erste Lagerelement und/oder das zumindest eine zweite Lagerelement sind/ist zu einer, insbesondere drehbaren,

Lagerung der zumindest einen Ankerwelle und insbesondere des zumindest einen Ankerelements vorgesehen. Der Elektromotor ist dazu vorgesehen, in einem Betriebszustand ein Heiz- und/oder Klimagebläse anzutreiben. Es sind jedoch auch andere, einem Fachmann als sinnvoll erscheinende Anwendungen des Elektromotors, wie beispielsweise in einer Handwerkzeugmaschine, denkbar. Dadurch kann eine vorteilhaft ruhige und bevorzugt leise Ausgestaltung des Elektromotors erreicht werden.

Ferner geht die Erfindung aus von einem Verfahren zur Herstellung der Dämpfungseinheit wie in Anspruch 12 beschrieben.

Es wird vorgeschlagen, dass das Verfahren zumindest einen Verfahrensschritt umfasst, in dem zumindest ein Anlaufelement der Dämpfungseinheit in einem zumindest 2-stufigen Spritzgussverfahren zumindest teilweise geformt wird. Unter einem stufigen Spritzgussverfahren" soll in diesem Zusammenhang insbesondere ein Spritzgussverfahren verstanden werden, bei dem in einem ersten Schritt ein erster Teil des zumindest einen Anlaufelements und in zumindest einem weiteren Schritt zumindest ein weiterer Teil des zumindest einen Anlaufelements geformt, insbesondere gespritzt, wird. Dadurch kann ein vorteilhaft flexibel ausgestaltetes Anlaufelement der Dämpfungseinheit erreicht werden.

Ferner wird vorgeschlagen, dass das Verfahren zumindest einen weiteren Verfahrensschritt umfasst, in dem das zumindest eine Anlaufelement zumindest teilweise mittels eines Ultraschallschweißverfahrens behandelt wird. Unter einem "Ultraschallschweißverfahren" soll in diesem Zusammenhang insbesondere ein Verfahren zur Erhöhung einer Adhäsion zwischen dem zumindest einen ersten Spritzgusselement und dem zumindest einen zweiten Spritzgusselement, insbesondere in dem Kontaktbereich, mittels Schall mit einer Frequenz, die oberhalb eines Hörfrequenzbereichs des Menschen liegt und vorzugsweise zwischen 16 kHz und 1 GHz liegt, verstanden werden. Dadurch kann auf vorteilhaft einfache Weise eine bevorzugt sichere und zuverlässige Verbindung zwischen dem zumindest einen ersten Spritzgusselement und dem zumindest einen zweiten Spritzgusselement erreicht werden.

Des Weiteren wird vorgeschlagen, dass das Verfahren zumindest einen weiteren Verfahrensschritt umfasst, in dem zumindest ein Hohlraum, der in zumindest einem ersten Spritzgusselement oder in zumindest einem zweiten Spritzgusselement des zumindest einen Anlaufelements angeordnet ist, zumindest im Wesentlichen verschlossen wird. einen Anlaufelements angeordnet ist, zumindest im Wesentlichen verschlossen wird. Unter "zumindest im Wesentlichen verschlossen" soll in diesem Zusammenhang insbesondere verstanden werden, dass der zumindest eine Hohlraum zu zumindest 50 %, vorzugsweise zu zumindest 70 %, bevorzugt zu zumindest 90 % und besonders bevorzugt zu zumindest 98 % von dem Material oder Materialgemisch des zumindest einen Anlaufelements, insbesondere in zumindest zwei Raumrichtungen, vorzugsweise in drei Raumrichtungen betrachtet, umschlossen wird. Dadurch können ein Fluidpolster, insbesondere ein Luftpolster innerhalb des zumindest einen Hohlraums und somit bevorzugt gute Dämpfungseigenschaften des zumindest einen Anlaufelements erreicht werden.

Die Dämpfungseinheit soll hierbei nicht auf die oben beschriebene Anwendung und Ausführungsform beschränkt sein. Insbesondere kann die Dämpfungseinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein erfindungsgemäßes und ein erläuterndes Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Rotoreinheit eines Elektromotors mit einer Dämpfungseinheit in einer schematischen Seitenansicht,
- Fig. 2: ein Ausschnitt eines Anlaufelements der Dämpfungseinheit in einer Schnittansicht,
- Fig. 3a: das Anlaufelement der Dämpfungseinheit in einer perspektivischen Draufsicht,
- Fig. 3b: das Anlaufelement der Dämpfungseinheit in einer perspektivischen Unteransicht,
- Fig. 4: das Anlaufelement der Dämpfungseinheit in einer Schnittansicht,
- Fig. 5a: ein erstes Spritzgusselement des Anlaufelements der Dämpfungseinheit in einer Schnittansicht,
- Fig. 5b: ein zweites Spritzgusselement des Anlaufelements der Dämpfungseinheit in einer Schnittansicht,
- Fig. 6: ein Ausschnitt des Anlaufelements der Dämpfungseinheit mit dem ersten Spritzgusselement und mit dem zweiten Spritzgusselement in einem gekoppelten Zustand in einer perspektivischen Schnittansicht,
- Fig. 7: ein Ausschnitt des Anlaufelements der Dämpfungseinheit mit einem ultraschallverschweißten Bereich zwischen dem ersten Spritzgusselement und mit dem zweiten Spritzgusselement in einer Schnittansicht,
- Fig. 8: ein Anlaufelement einer erfindungsgemäßen Dämpfungseinheit mit mehreren Verzahnungselementen in einer perspektivischen Ansicht,
- Fig. 9: das Anlaufelement der erfindungsgemäßen Dämpfungseinheit in einer perspektivischen Schnittansicht,
- Fig. 10: ein Ausschnitt des Anlaufelements der erfindungsgemäßen Dämpfungseinheit in einer Schnittansicht und
- Fig. 11: ein schematisches Ablaufdiagramm eines Verfahrens zur Herstellung der Dämpfungseinheit.

### Beschreibung der Ausführungsbeispiele

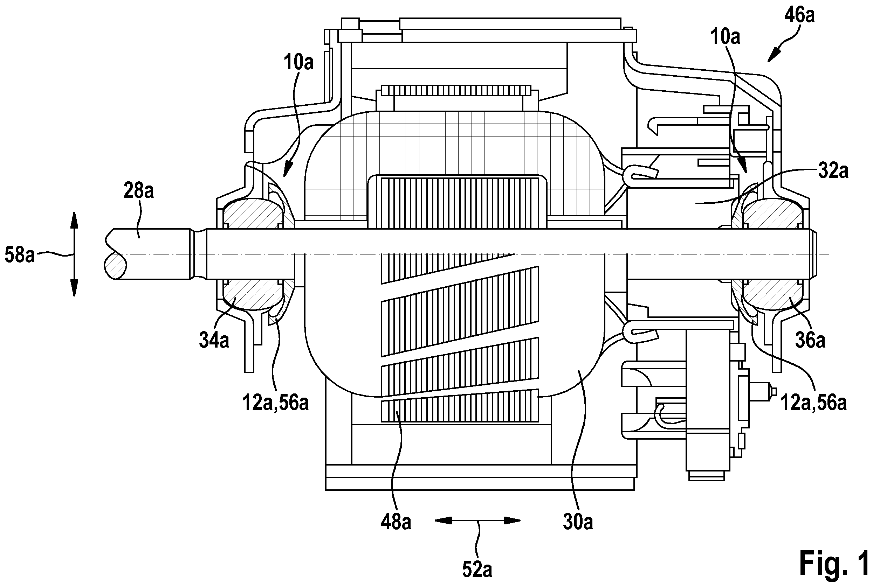

In Figur 1 ist eine Rotoreinheit 46a einer von einem Elektromotor gebildete elektrische Antriebsvorrichtung dargestellt. Der Elektromotor ist dazu vorgesehen, ein elektrisches Heiz- und/oder Klimagebläse anzutreiben. Der Elektromotor ist als DC-Motor ausgebildet. Es ist jedoch auch denkbar, dass der Elektromotor als BLDC-Motor oder auf eine andere, einem Fachmann als sinnvoll erscheinende Weise ausgebildet ist. Der Elektromotor weist ein Ankerelement 30a, einen Kommutator 32a, ein erstes Lagerelement 34a, ein zweites Lagerelement 36a und eine Dämpfungseinheit 10a auf. Die Rotoreinheit 46a des Elektromotors umfasst das Ankerelement 30a. Das Ankerelement 30a ist aus Eisen gebildet. Das Ankerelement 30a ist aus aufeinander gestapelten Eisenblechen gebildet. Das Ankerelement 30a weist nicht näher dargestellte Nuten auf, in denen sich zumindest eine Wicklung 48a erstreckt. Das Ankerelement 30a weist mehrere Wicklungen 48a auf. Die Wicklungen 48a sind mit dem schematisch dargestellten Kommutator 32a verbunden. Die Wicklungen 48a verlaufen über einen Wicklungskopf des Ankerelements 30a. Das Ankerelement 30a weist zwei Wicklungsköpfe auf, die in einer Haupterstreckungsrichtung 52 des Ankerelements 30a gegenüberliegend angeordnet sind. Die Haupterstreckungsrichtung 52 des Ankerelements 30a verläuft parallel zur Ankerwelle 28a der Rotoreinheit 46a.

Im Bereich des Wicklungskopfs 20a sind die Wicklungen 48a sich überkreuzend angeordnet. Die Wicklungen 48a sind dazu vorgesehen, in einem Betriebszustand mit einem elektrischen Strom durchflossen zu werden, wodurch ein Magnetfeld induziert wird. Das induzierte Magnetfeld wirkt in einem Betriebszustand mit einem Magnetfeld einer nicht dargestellten Statoreinheit des Elektromotors zusammen. Ferner weist die Rotoreinheit 46a eine nicht dargestellte Abtriebsverzahnung zur Übertragung einer Abtriebsbewegung der Rotoreinheit 46a des Elektromotors auf eine Antriebsspindel des Heiz- und/oder Klimagebläses auf.

Zudem umfasst der Elektromotor das erste Lagerelement 34a und das zweite Lagerelement 36a, die die Rotoreinheit 46a drehbar um eine Rotationsachse der Ankerwelle 28a lagern. Das erste Lagerelement 34a und das zweite Lagerelement 36a sind, in Haupterstreckungsrichtung 52a der Rotoreinheit 46a des Elektromotors betrachtet, auf sich gegenüberliegenden Seiten des Ankerelements 30a angeordnet. Das erste Lagerelement 34a und das zweite Lagerelement 36a schließen das Ankerelement 30a, in Haupterstreckungsrichtung 52a der Rotoreinheit 46a des Elektromotors betrachtet, ein. Das erste Lagerelement 34a und das zweite Lagerelement 36a kontaktieren die Ankerwelle 28a direkt. Das erste Lagerelement 34a ist, in Haupterstreckungsrichtung 52a der Rotoreinheit 46a des Elektromotors betrachtet, auf einer dem Kommutator 32a abgewandten Seite der Rotoreinheit 46a des Elektromotors angeordnet. Das zweite Lagerelement 36a ist, in Haupterstreckungsrichtung 52a der Rotoreinheit 46a des Elektromotors betrachtet, auf einer dem Kommutator 32a zugewandten Seite der Rotoreinheit 46a des Elektromotors angeordnet. Das erste Lagerelement 34a und das zweite Lagerelement 36a sind als Gleitlager ausgebildet. Das erste Lagerelement 34a und das zweite Lagerelement 36a sind von Kalottenlagern gebildet. Es sind jedoch auch andere, einem Fachmann als sinnvoll erscheinende Ausgestaltungen des ersten Lagerelements 34a und/oder des zweiten Lagerelements 36a denkbar. Das Ankerelement 30a der Rotoreinheit 46a ist relativ zu dem ersten Lagerelement 34a und dem zweiten Lagerelement 36a drehbar gelagert. Das Ankerelement 30a der Rotoreinheit 46 weist, in Haupterstreckungsrichtung 52a der Rotoreinheit 46a des Elektromotors betrachtet, relativ zu dem ersten Lagerelement 34a und dem zweiten Lagerelement 36a ein Längsspiel auf. Das Längsspiel beträgt zwischen 0,1 mm und 0,4 mm. In einem Betriebszustand des Elektromotors können durch das Längsspiel des Ankerelements 30a eine Ankerlängsschwingung und somit ein hoher Betriebsgeräuschpegel des Elektromotors entstehen.

Zur Dämpfung der Ankerlängsschwingung des Ankerelements 30a in einem Betriebszustand des Elektromotors ist die Dämpfungseinheit 10a vorgesehen. Die Dämpfungseinheit 10a ist auf der Ankerwelle 28a zumindest teilweise zwischen dem zumindest einen ersten Lagerelement 34a und dem zumindest einen Ankerelement 30a und/oder zumindest teilweise zwischen dem zumindest einen Kommutator 32a und dem zumindest einen zweiten Lagerelement 36a angeordnet. Die Dämpfungseinheit 10a weist zumindest ein Anlaufelement 12a auf. Die Dämpfungseinheit 10a weist zumindest zwei Anlaufelemente 12a auf. Die Dämpfungseinheit 10a umfasst ein erstes Anlaufelement 12a und ein zweites Anlaufelement 12a. Das erste Anlaufelement 12a und das zweite Anlaufelement 12a sind jeweils als Anlaufscheibe 56a ausgebildet. Die Anlaufelemente 12a sind scheibenförmig ausgebildet. Es ist jedoch auch denkbar, dass die Anlaufelemente 12a zumindest teilweise scheibensegmentförmig ausgebildet sind. Das erste Anlaufelement 12a ist, in Haupterstreckungsrichtung 52a der Rotoreinheit 46a des Elektromotors betrachtet, zwischen dem ersten Lagerelement 34a und dem Ankerelement 30a angeordnet. Das zweite Anlaufelement 12a ist, in Haupterstreckungsrichtung 52a der Rotoreinheit 46a des Elektromotors betrachtet, zwischen dem Kommutator 32a und dem zweiten Lagerelement 36a angeordnet.

In einem Betriebszustand des Elektromotors werden Axialkräfte, die durch die Ankerlängsschwingung von dem Ankerelement 30a auf die Lagerelemente 34a, 36a übertragen werden, über senkrecht zur Haupterstreckungsrichtung 52a angeordnete Flächen der Anlaufelemente 12a auf die Anlaufelemente 12a übertragen und abgefedert. Die Anlaufelemente 12a sind aus einem Kunststoff gebildet. Es sind jedoch auch andere, einem Fachmann als sinnvoll erscheinende Ausgestaltungen der Anlaufelemente 12a, wie insbesondere aus zumindest einem zusätzlichen oder alternativen Werkstoff, denkbar. In dem in Figur 1 dargestellten Ausführungsbeispiel ist die Dämpfungseinheit 10a innerhalb eines Gehäuses des Elektromotors angeordnet. Es ist jedoch auch denkbar, dass die Dämpfungseinheit zumindest teilweise außerhalb des Gehäuses des Elektromotors angeordnet ist.

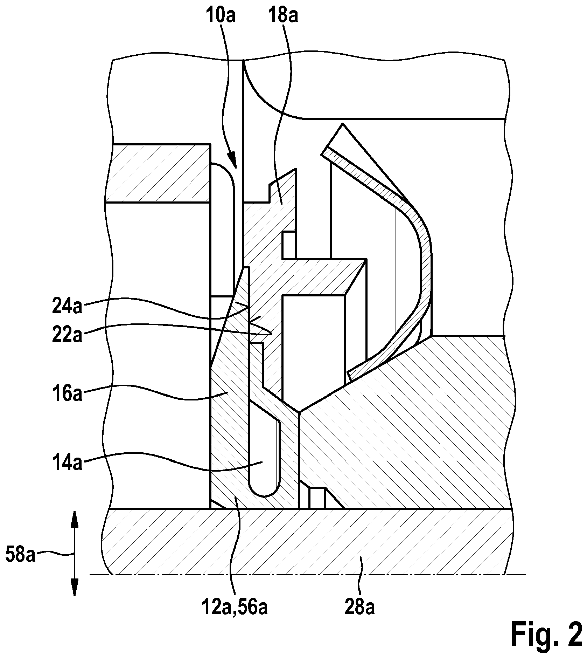

In Figur 2 ist ein Ausschnitt eines der Anlaufelemente 12a in einer Schnittansicht dargestellt. Das erste Anlaufelement 12a und das zweite Anlaufelement 12a sind zumindest im Wesentlichen identisch ausgebildet. Das erste Anlaufelement 12a und das zweite Anlaufelement 12a sind identisch ausgebildet. Das erste Anlaufelement 12a weist zumindest einen Hohlraum 14a zu einer Dämpfung der zumindest einen Ankerlängsschwingung des Elektromotors in zumindest einem Betriebszustand auf. Das zweite Anlaufelement 12a weist einen Hohlraum 14a zu einer Dämpfung der zumindest einen Ankerlängsschwingung des Elektromotors in zumindest einem Betriebszustand auf. Die Anlaufelemente 12a weisen jeweils einen Hohlraum 14a zu einer Dämpfung der zumindest einen Ankerlängsschwingung des Elektromotors in zumindest einem Betriebszustand auf. Der Hohlraum 14a bildet in einem montierten Zustand jeweils ein Fluidpolster, das zu einer Dämpfung der Ankerlängsschwingung des Elektromotors in einem Betriebszustand vorgesehen ist. Der Hohlraum 14a bildet in einem montierten Zustand jeweils ein Luftpolster. Der Hohlraum 14a bildet einen Dämpfungsbereich des jeweiligen Anlaufelements 12a.

Der Hohlraum 14a ist jeweils zumindest teilweise entlang einer Umfangsrichtung 20a der Anlaufelemente 12a angeordnet. Der Hohlraum 14a ist jeweils entlang der Umfangsrichtung 20a der Anlaufelemente 12a umlaufend angeordnet. Der Hohlraum 14a ist jeweils ringförmig ausgebildet. Der Hohlraum 14a weist jeweils, in einer Ebene, die senkrecht zu einer Tangentialrichtung des Anlaufelements 12a angeordnet ist, zwei Querschnittsflächen auf, die jeweils einen dreieckigen Bereich, einen rechteckigen Bereich und einen halbkreisförmigen Bereich aufweisen. Der halbkreisförmige Bereich, der rechteckige Bereich und der dreieckige Bereich sind, in Radialrichtung 58a des Anlaufelements 12a von innen nach außen betrachtet, nacheinander angeordnet. Es sind jedoch auch andere, einem Fachmann als sinnvoll erscheinende Ausgestaltungen der Querschnittflächen des Hohlraums 14a, in einer Ebene, die senkrecht zu einer Tangentialrichtung des Anlaufelements 12a angeordnet ist, wie beispielsweise polygonal, tropfenförmig, kreisförmige, rechteckig, oval oder quadratisch, denkbar. Durch den Hohlraum 14a kann eine Dämpfungscharakteristik des jeweiligen Anlaufelements 12a beeinflusst und ein elastischer Bereich des jeweiligen Anlaufelements 12a erreicht werden.

Das erste Spritzgusselement 16a weist, in Radialrichtung 58a betrachtet, in einem Bereich des Hohlraums 14a einen Bereich auf, der in einem Betriebszustand als Biegebalken dient und elastisch zu dem Hohlraum hin verformt werden kann. Axiale Kräfte, die in einem Betriebszustand durch die Ankerlängsschwingung von dem ersten Lagerelement oder dem zweiten Lagerelement auf das Anlaufelement wirken, erzeugen die elastische Verformung des ersten Spritzgusselements 16a im Bereich des Hohlraums 14a und werden dadurch gedämpft.

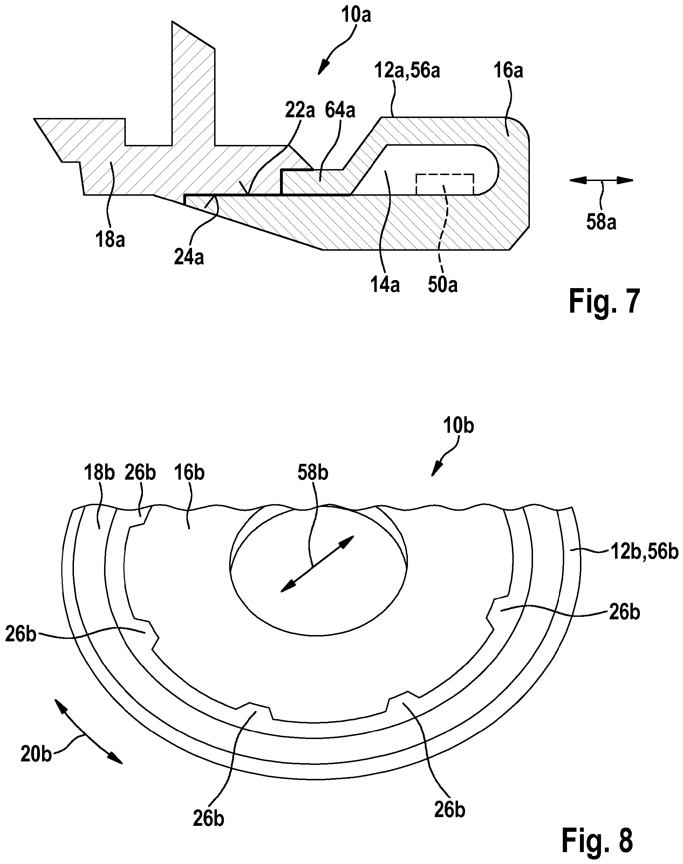

Zusätzlich ist es denkbar, dass innerhalb des Hohlraums 14a ein Anschlagelement 50a vorgesehen ist, das dazu vorgesehen ist, eine Verformung des Anlaufelements 12a im Bereich des Hohlraums 14a in einem Betriebszustand zu begrenzen. Das Anschlagelement 50a ist in Figur 7 gestrichelt dargestellt. Das Anschlagelement 50a ist aus einem Kunststoff gebildet. Das Anschlagelement 50a kann entlang des Hohlraums 14a umlaufend ausgebildet sein. Es ist jedoch auch denkbar, dass mehrere, beispielsweise drei, Anschlagelemente 50a vorgesehen sind, die, in Umfangsrichtung 20a betrachtet, gleichmäßig entlang des Hohlraums 14a verteilt angeordnet sind. Das Anschlagelement 50a ist fest mit dem ersten Spritzgusselement 16a des Anlaufelements 12a verbunden. Das Anschlagelement 50a ist einstückig mit dem ersten Spritzgusselement 16a des Anlaufelements 12a ausgebildet. Es ist jedoch auch denkbar, dass das Anschlagelement 50a an das erste Spritzgusselement 16a des Anlaufelements 12a angeklebt oder auf eine andere, einem Fachmann als sinnvoll erscheinende Weise mit dem ersten Spritzgusselement 16a des Anlaufelements 12a verbunden ist.

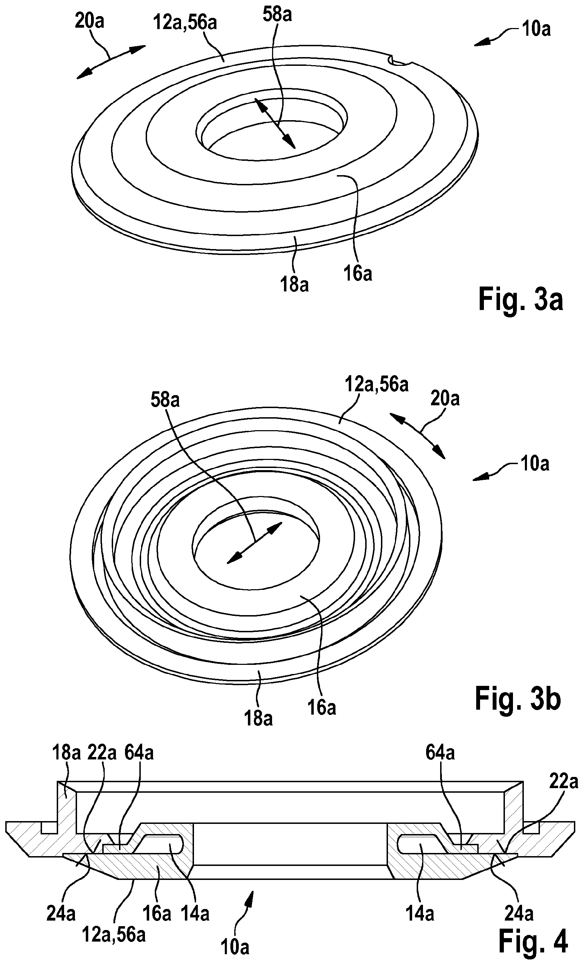

Das erste Anlaufelement 12a und das zweite Anlaufelement 12a der Dämpfungseinheit 10a weisen jeweils ein erstes Spritzgusselement 16a und ein zweites Spritzgusselement 18a auf (Figuren 3a und 3b). Das erste Spritzgusselement 16a und das zweite Spritzgusselement 18a werden in einem 2-stufigen Spritzgussverfahren nacheinander geformt. Das erste Spritzgusselement 16a und das zweite Spritzgusselement 18a sind zumindest teilweise fest miteinander verbunden. Das erste Spritzgusselement 16a und das zweite Spritzgusselement 18a sind jeweils fest miteinander verbunden. Das erste Spritzgusselement 16a und das zweite Spritzgusselement 18a sind zumindest teilweise einstückig ausgebildet. Das erste Spritzgusselement 16a und das zweite Spritzgusselement 18a sind jeweils einstückig ausgebildet. Das erste Spritzgusselement 16a wird in einem ersten Schritt 60 des Spritzgussverfahrens geformt. Anschließend wird das zweite Spritzgusselement 18a in einem zweiten Schritt 62 des Spritzgussverfahrens geformt und an das erste Spritzgusselement 16a angespritzt. Es ist jedoch auch denkbar, dass das zweite Spritzgusselement 18a separat in dem zweiten Schritt 62 des Spritzgussverfahrens geformt und anschließend mit dem ersten Spritzgusselement 16a verbunden wird.

Das erste Anlaufelement 12a und das zweite Anlaufelement 12a weisen jeweils einen ultraschallbearbeiteten Kontaktbereich 22a, 24a zwischen dem ersten Spritzgusselement 16a und dem zweiten Spritzgusselement 18a auf (Figur 7). Das erste Spritzgusselement 16a weist den Kontaktbereich 22a auf. Das zweite Spritzgusselement 18a weist den Kontaktbereich 24a auf. In dem ultraschallbearbeiteten Kontaktbereich 22a, 24a zwischen dem ersten Spritzgusselement 16a und dem zweiten Spritzgusselement 18a weisen das erste Anlaufelement 12a und das zweite Anlaufelement 12a jeweils eine hohe Adhäsion zwischen dem ersten Spritzgusselement 16a und dem zweiten Spritzgusselement 18a auf, sodass ein Lösen der stoffschlüssigen Verbindung zwischen dem ersten Spritzgusselement 16a und dem zweiten Spritzgusselement 18a des Anlaufelements 12a in einem Betriebszustand der Dämpfungseinheit 10a verhindert werden kann.

Das erste Spritzgusselement 16a und das zweite Spritzgusselement 18a sind zumindest teilweise aus einem gleichen Material gebildet. Das erste Spritzgusselement 16a und das zweite Spritzgusselement 18a sind jeweils vollständig aus dem gleichen Material gebildet. Das erste Spritzgusselement 16a und das zweite Spritzgusselement 18a sind aus einem Kunststoff gebildet. Es sind jedoch auch andere, einem Fachmann als sinnvoll erscheinende Materialen denkbar. Der Hohlraum 14a des ersten Anlaufelements 12a und der Hohlraum 14a des zweiten Anlaufelements 12a sind jeweils zumindest im Wesentlichen in dem ersten Spritzgusselement 16a oder in dem zweiten Spritzgusselement 18a angeordnet (Figur 4). Der Hohlraum 14a des ersten Anlaufelements 12a ist in dem ersten Spritzgusselement 16a angeordnet und wird vollständig von dem ersten Spritzgusselement 16a umschlossen. Der Hohlraum 14a des zweiten Anlaufelements 12a ist in dem ersten Spritzgusselement 16a angeordnet und wird vollständig von dem ersten Spritzgusselement 16a umschlossen. Es ist jedoch auch denkbar, dass der Hohlraum 14a in dem zweiten Spritzgusselement 18a angeordnet ist und von dem zweiten Spritzgusselement 18a umschlossen wird. In einem montierten Zustand sind der Hohlraum 14a des ersten Anlaufelements 12a und der Hohlraum 14a des zweiten Anlaufelements 12a jeweils zumindest im Wesentlichen luftdicht ausgebildet. Der Hohlraum 14a des ersten Anlaufelements 12a und der Hohlraum 14a des zweiten Anlaufelements 12a sind in einem montierten Zustand jeweils luftdicht ausgebildet.

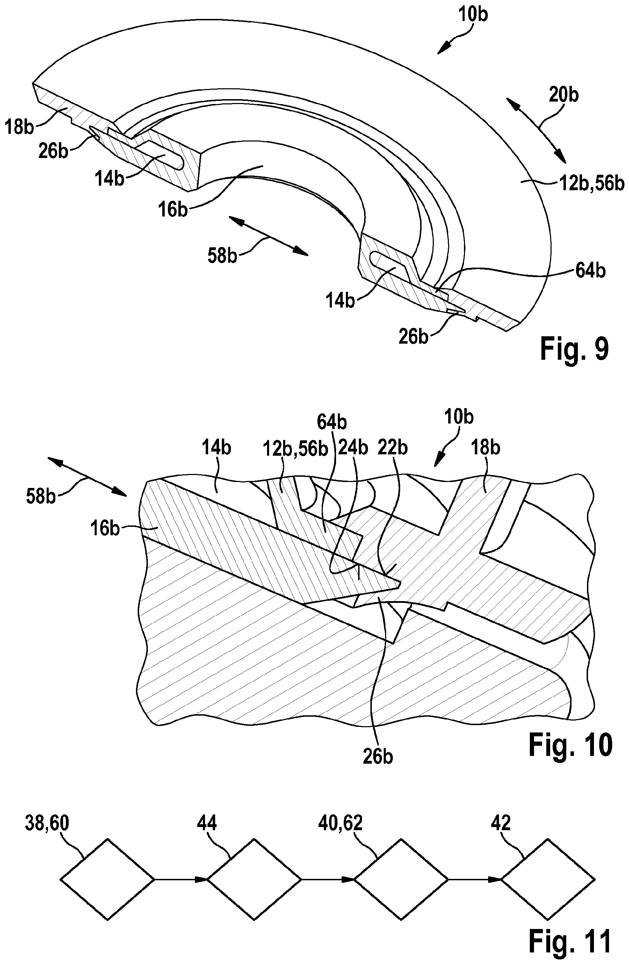

In Figur 11 ist ein Ablaufdiagramm eines Verfahrens zur Herstellung der Dämpfungseinheit 10a schematisch dargestellt. Das erste Anlaufelement 12a und das zweite Anlaufelement 12a werden in einem Verfahrensschritt 38, 40 des Verfahrens zur Herstellung der Dämpfungseinheit 10a in dem 2-stufigen Spritzgussverfahren zumindest teilweise geformt. Das erste Anlaufelement 12a und das zweite Anlaufelement 12a werden in dem Verfahrensschritt 38, 40 des Verfahrens zur Herstellung der Dämpfungseinheit 10a in dem 2-stufigen Spritzgussverfahren zumindest nahezu vollständig geformt. Nachdem das erste Spritzgusselement 16a in dem ersten Schritt 60 des Spritzgussverfahrens, der dem Verfahrensschritt 38 des Verfahrens entspricht, geformt wurde, ist der Hohlraum 14a, der in das erste Spritzgusselement 16a eingebracht ist, offen ausgebildet. Das erste Spritzgusselement 16a weist einen Laschenbereich 64a auf, der dazu vorgesehen ist, in einem montierten Zustand einen Kontaktbereich 22a des ersten Spritzgusselements 16a direkt zu kontaktieren und den Hohlraum 14a dadurch abzuschließen.

In einem unmontierten Zustand ist der Laschenbereich 64a des ersten Spritzgusselements 16a beabstandet zu dem Kontaktbereich 22a des ersten Spritzgusselements 16a angeordnet. In einem weiteren Verfahrensschritt 44 des Verfahrens zur Herstellung der Dämpfungseinheit 10a wird der Hohlraum 14a, der in dem ersten Spritzgusselement 16a oder in dem zweiten Spritzgusselement 18a des ersten Anlaufelements 12a bzw. des zweiten Anlaufelements 12a angeordnet ist, zumindest im Wesentlichen verschlossen. In dem weiteren Verfahrensschritt 44 des Verfahrens zur Herstellung der Dämpfungseinheit 10a wird der Hohlraum 14a, der in das erste Spritzgusselement 16a eingebracht ist, verschlossen. Der Hohlraum 14a wird in dem weiteren Verfahrensschritt 44 verschlossen, indem der Laschenbereich 64a auf den Kontaktbereich 22a des ersten Spritzgusselements 16a gedrückt wird. Anschließend wird in dem zweiten Schritt 62 des Spritzgussverfahrens, der dem Verfahrensschritt 40 des Verfahrens entspricht, das zweite Spritzgusselement 18a an das erste Spritzgusselement 16a angespritzt. Dadurch wird der Laschenbereich 64a des ersten Spritzgusselements 16a relativ zu dem Kontaktbereich 22a des ersten Spritzgusselements 16a in einem geschlossenen Zustand des Hohlraums 14a fixiert.

In einem weiteren Verfahrensschritt 42 des Verfahrens zur Herstellung der Dämpfungseinheit 10a werden das erste Anlaufelement 12a und das zweite Anlaufelement 12a jeweils zumindest teilweise mittels eines Ultraschallschweißverfahrens behandelt.

In dem weiteren Verfahrensschritt 42a des Verfahrens zur Herstellung der Dämpfungseinheit 10a werden das erste Anlaufelement 12a und das zweite Anlaufelement 12a jeweils in dem Kontaktbereich 22a, 24a zwischen dem ersten Spritzgusselement 16a und dem zweiten Spritzgusselement 18a mittels eines Ultraschallschweißverfahrens behandelt. Es sind jedoch auch andere, einem Fachmann als sinnvoll erscheinende Verfahren zur Verbesserung einer Adhäsion zwischen dem ersten Spritzgusselement 16a und dem zweiten Spritzgusselement 18a denkbar. Eine stoffschlüssige Verbindung des Kontaktbereichs 22a des ersten Spritzgusselements 16a und des Kontaktbereichs 24 des zweiten Spritzgusselements 18a kann dadurch verbessert werden.

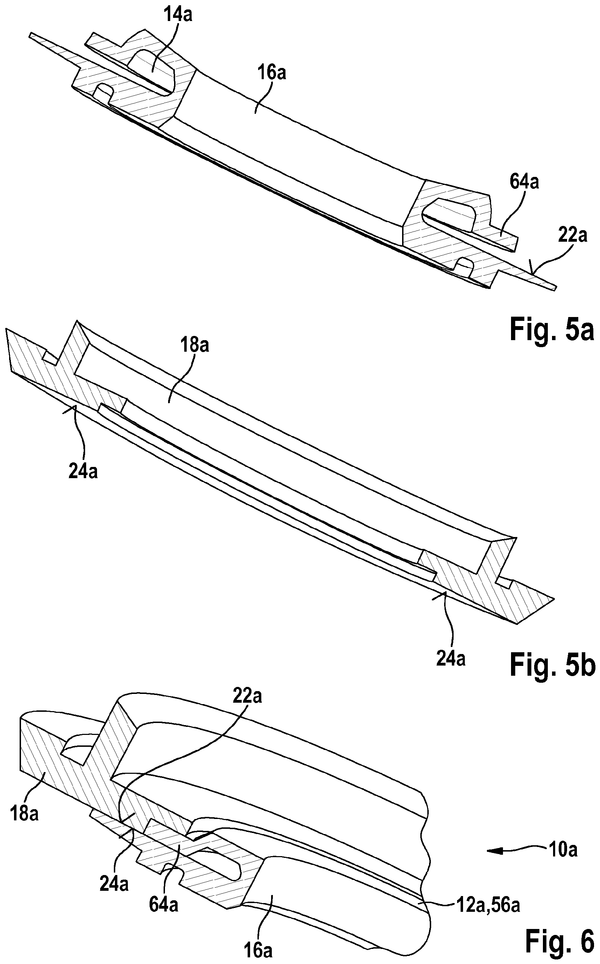

In den Figuren 8 bis 10 ist ein erfindungsgemäßes Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In dem erfindungsgemäßen Ausführungsbeispiel der Figuren 8 bis 10 ist der Buchstabe a durch den Buchstaben b ersetzt.

In den Figuren 8 bis 10 ist ein Anlaufelement 12b einer erfindungsgemäßen Dämpfungseinheit 10b dargestellt. Das Anlaufelement 12b entspricht zu einem Großteil dem bereits beschriebenen Anlaufelement 12a. Die erfindungsgemäßen Dämpfungseinheit 10b weist zwei Anlaufelemente 12b auf. Die Anlaufelemente 12b sind zumindest im Wesentlichen identisch ausgebildet. Die Anlaufelemente 12b sind identisch ausgebildet. Die erfindungsgemäßen Dämpfungseinheit 10b wird in dem bereits beschriebenen Verfahren hergestellt. Das Anlaufelement 12b umfasst ein erstes Spritzgusselement 16b und ein zweites Spritzgusselement 18b. Das erste Spritzgusselement 16b und das zweite Spritzgusselement 18b werden in einem 2-stufigen Spritzgussverfahren nacheinander geformt. Das erste Spritzgusselement 16b und das zweite Spritzgusselement 18b sind zumindest teilweise fest miteinander verbunden. Das erste Spritzgusselement 16b und das zweite Spritzgusselement 18b sind jeweils fest miteinander verbunden. Das erste Spritzgusselement 16b und das zweite Spritzgusselement 18b sind zumindest teilweise einstückig ausgebildet. Das erste Spritzgusselement 16b und das zweite Spritzgusselement 18b sind jeweils einstückig ausgebildet. Das erste Spritzgusselement 16b wird an das zweite Spritzgusselement 18b in dem Spritzgussverfahren angespritzt. Das erste Spritzgusselement 16b und das zweite Spritzgusselement 18b sind stoffschlüssig miteinander verbunden.

Das Anlaufelement 12b umfasst zumindest ein Verzahnungselement 26b, das zumindest teilweise zu einer formschlüssigen Kopplung zwischen dem zumindest einen ersten Spritzgusselement 16b und dem zumindest einen zweiten Spritzgusselement 18b vorgesehen ist. Das Anlaufelement 12b umfasst zumindest zwei Verzahnungselemente 26b. Das Anlaufelement 12b umfasst mehrere Verzahnungselemente 26b, die zu einer zusätzlich formschlüssigen Kopplung zwischen dem ersten Spritzgusselement 16b und dem zweiten Spritzgusselement 18b vorgesehen sind. Die Verzahnungselemente 26b sind gleichmäßig in Umfangsrichtung 20b des Anlaufelements 12b verteilt angeordnet. Das Anlaufelement 12b weist acht gleichmäßig in Umfangsrichtung 20b verteilt angeordnete Verzahnungselemente 26b auf. Zumindest eines der Verzahnungselemente 26b ist zumindest teilweise einstückig mit dem ersten Spritzgusselement 16b oder mit dem zweiten Spritzgusselement 18b ausgebildet. Die Verzahnungselemente 26b sind einstückig mit dem zweiten Spritzgusselement 18b ausgebildet. Die Verzahnungselemente 26b weisen jeweils eine trapezförmige Kontur auf, die sich von einem, in Radialrichtung 58b des Anlaufelements 12b betrachtet, inneren Rand des zweiten Spritzgusselements 12b in Radialrichtung 58b nach innen erstreckt. Es sind jedoch auch andere, einem Fachmann als sinnvoll erscheinende Ausgestaltungen der Verzahnungselemente, wie insbesondere mit einer halbkreisförmigen, dreieckigen, ellipsenförmigen und/oder rechteckigen Kontur, denkbar. In einem montierten Zustand sind die Verzahnungselemente 26b des zweiten Spritzgusselements in einer Ebene, die parallel zu einer Umfangsrichtung 20b des Anlaufelements 12b angeordnet ist, an das erste Spritzgusselement 16b angespritzt und fixieren das erste Spritzgusselement 16b stoffschlüssig. In dem montierten Zustand übergreifen die Verzahnungselemente 26b des zweiten Spritzgusselements in einer Ebene, die parallel zu einer Umfangsrichtung 20b des Anlaufelements 12b angeordnet ist, das erste Spritzgusselement 16b und fixieren das erste Spritzgusselement 16b formschlüssig.

## Patentansprüche

1. Dämpfungseinheit mit zumindest einem Anlaufelement (12), das zu einer Dämpfung zumindest einer Ankerlängsschwingung eines Elektromotors in zumindest einem Betriebszustand vorgesehen ist, und das einen elastisch verformbaren Hohlraum (14) zu einer Dämpfung der zumindest einen Ankerlängsschwingung des Elektromotors in zumindest einem Betriebszustand und ein erstes Spritzgusselement (16) und ein zweites Spritzgusselement (18) aufweist, wobei der eine Hohlraum (14) in dem einen ersten Spritzgusselement (16) oder in dem einen zweiten Spritzgusselement (18) angeordnet ist, **dadurch gekennzeichnet, dass** das zumindest eine Anlaufelement (12) zumindest ein Verzahnungselement (26) umfasst, das zumindest teilweise zu einer formschlüssigen Kopplung zwischen dem einen ersten Spritzgusselement (16) und dem einen zweiten Spritzgusselement (18) vorgesehen ist.

2. Dämpfungseinheit nach Anspruch 1, **dadurch gekennzeichnet, dass** der zumindest eine Hohlraum (14) zumindest teilweise entlang einer Umfangsrichtung (20) des Anlaufelements (12) angeordnet ist.

3. Dämpfungseinheit nach einem der vorhergehendenAnsprüche, **dadurch gekennzeichnet, dass** der zumindest eine Hohlraum (14) zumindest teilweise ringförmig ausgebildet ist.

4. Dämpfungseinheit nach einem der vorhergehenden Ansprüche, **gekennzeichnet durch** zumindest zwei Anlaufelemente (12), die zur Dämpfung zumindest der Ankerlängsschwingung des Elektromotors in zumindest einem Betriebszustand vorgesehen sind.

5. Dämpfungseinheit nach einem der vorhergehendenAnsprüche, **dadurch gekennzeichnet, dass** das zumindest eine erste Spritzgusselement (16) und das zumindest eine zweite Spritzgusselement (18) zumindest teilweise fest miteinander verbunden sind.

6. Dämpfungseinheit nach einem der vorhergehendenAnsprüche, **dadurch gekennzeichnet, dass** das zumindest eine erste Spritzgusselement (16) und das zumindest eine zweite Spritzgusselement (18) zumindest teilweise einstückig ausgebildet sind.

7. Dämpfungseinheit nach einem der vorhergehendenAnsprüche, **dadurch gekennzeichnet, dass** das zumindest eine Anlaufelement (12) zumindest einen ultraschallbearbeiteten Kontaktbereich (22, 24) zwischen dem zumindest einen ersten Spritzgusselement (16) und dem zumindest einen zweiten Spritzgusselement(18) umfasst.

8. Dämpfungseinheit nach einem der vorhergehendenAnsprüche, **dadurch gekennzeichnet, dass** der zumindest eine Hohlraum (14) zumindest in einem montierten Zustand zumindest im Wesentlichen luftdicht ausgebildet ist.

9. Dämpfungseinheit nach einem der vorhergehendenAnsprüche, **dadurch gekennzeichnet, dass** das zumindest eine erste Spritzgusselement (16) und das zumindest eine zweite Spritzgusselement (18) zumindest teilweise aus einem gleichen Material gebildet sind.

10. Dämpfungseinheit nach einem der vorhergehendenAnsprüche, **dadurch gekennzeichnet, dass** das zumindest eine Verzahnungselement (26)zumindest teilweise einstückig mit dem zumindest einen ersten Spritzgusselement (16) oder dem zumindest einen zweiten Spritzgusselement (18) ausgebildet ist.

11. Elektromotor mit zumindest einer Ankerwelle (28), mit zumindest einem Ankerelement (30), mit zumindest einem Kommutator (32), mit zumindest einem ersten Lagerelement (34) und zumindest einem zweiten Lagerelement (36) und mit einer Dämpfungseinheit (10) nach einem der vorhergehenden Ansprüche, die auf der Ankerwelle (30) zumindest teilweise zwischen dem zumindest einen ersten Lagerelement (34) und dem zumindest einen Ankerelement (30) und/oder zumindest teilweise zwischen dem zumindest einen Kommutator (23) und dem zumindest einen zweiten Lagerelement (36) angeordnet ist.

12. Verfahren zur Herstellung einer Dämpfungseinheit (10) nach einem der Ansprüche 1 bis 10, **gekennzeichnet durch** zumindest einen Verfahrensschritt (38, 40), in dem zumindest ein Anlaufelement (12) der Dämpfungseinheit (10) in einem zumindest 2-stufigen Spritzgussverfahren zumindest teilweise geformt wird.

13. Verfahren nach Anspruch 12, **gekennzeichnet durch** zumindest einen weiteren Verfahrensschritt (42), in dem das zumindest eineAnlaufelement (12) zumindest teilweise mittels eines Ultraschallschweißverfahrens behandelt wird.

14. Verfahren zumindest nach Anspruch 12, **gekennzeichnet durch** zumindest einen weiteren Verfahrensschritt (44), in dem zumindest ein Hohlraum (14), der in zumindest einem ersten Spritzgusselement (16) oder in zumindest einem zweiten Spritzgusselement (18) des zumindest einen Anlaufelements (12) angeordnet ist, zumindest im Wesentlichen verschlossen wird.

## Claims

1. Damping unit comprising at least one run-on element (12), which is provided to damp at least one armature longitudinal vibration of an electric motor in at least one operating state, and which has one elastically deformable hollow space (14) for damping the at least one armature longitudinal vibration of the electric motor in at least one operating state and one first injection-moulded element (16) and one second injection-moulded element (18), wherein the one hollow space (14) is arranged in the one first injection-moulded element (16) or in the one second injection-moulded element (18), **characterized in that** the at least one run-on element (12) comprises at least one toothed element (26), which is at least partly provided for a form-fitting coupling between the one first injection-moulded element (16) and the one second injection-moulded element (18).

2. Damping unit according to Claim 1, **characterized in that** the at least one hollow space (14) is at least partly arranged along a circumferential direction (20) of the run-on element (12).

3. Damping unit according to one of the preceding claims, **characterized in that** the at least one hollow space (14) is at least partly annular.

4. Damping unit according to one of the preceding claims, **characterized by** at least two run-on elements (12), which are provided to damp at least the armature longitudinal vibration of the electric motor in at least one operating state.

5. Damping unit according to one of the preceding claims, **characterized in that** the at least one first injection-moulded element (16) and the at least one second injection-moulded element (18) are at least partly firmly connected to one another.

6. Damping unit according to one of the preceding claims, **characterized in that** the at least one first injection-moulded element (16) and the at least one second injection-moulded element (18) are at least partly formed in one piece.

7. Damping unit according to one of the preceding claims, **characterized in that** the at least one run-on element (12) comprises at least one ultrasonically processed contact region (22, 24) between the at least one first injection-moulded element (16) and the at least one second injection-moulded element (18).

8. Damping element according to one of the preceding claims, **characterized in that** the at least one hollow space (14) is at least substantially airtight, at least in an assembled state.

9. Damping unit according to one of the preceding claims, **characterized in that** the at least one first injection-moulded element (16) and the at least one second injection-moulded element (18) are at least partly formed from the same material.

10. Damping unit according to one of the preceding claims, **characterized in that** the at least one toothed element (26) is at least partly formed in one piece with the at least one first injection-moulded element (16) or the at least one second injection-moulded element (18).

11. Electric motor having at least one armature shaft (28), having at least one armature element (30) with at least one commutator (32), having at least one first bearing element (34) and at least one second bearing element (36), and having a damping unit (10) according to one of the preceding claims, which is arranged on the armature shaft (28), at least partly between the at least one first bearing element (34) and the at least one armature element (30) and/or at least partly between the at least one commutator (23) and the at least one second bearing element (36).

12. Method for producing a damping unit (10) according to one of Claims 1 to 10, **characterized by** at least one method step (38, 40), in which the at least one run-one element (12) of the damping unit (10) is at least partly shaped in an at least 2-stage injection-moulding method.

13. Method according to Claim 12, **characterized by** at least one further method step (42), in which the at least one run-on element (12) is at least partly treated by means of an ultrasonic welding method.

14. Method at least according to Claim 12, **characterized by** at least one further method step (44), in which at least one hollow space (14), which is arranged in at least one first injection-moulded element (16) or in at least one second injection-moulded element (18) of the at least one run-on element (12), is at least substantially closed.

## Revendications

1. Unité d'amortissement comprenant au moins un élément de démarrage (12) qui est prévu pour amortir au moins une vibration d'induit longitudinale d'un moteur électrique dans au moins un état de fonctionnement, et qui comporte une cavité élastiquement déformable (14) pour amortir l'au moins une vibration d'induit longitudinale du moteur électrique dans au moins un état de fonctionnement et un premier élément de moulage par injection (16) et un deuxième élément de moulage par injection (18), la cavité (14) étant ménagée dans le premier élément de moulage par injection (16) ou dans le deuxième élément de moulage par injection (18), **caractérisée en ce que** l'au moins un élément de démarrage (12) comprend au moins un élément de denture (26) qui est au moins en partie prévu pour effectuer un accouplement par complémentarité de formes entre le premier élément de moulage par injection (16) et le deuxième élément de moulage par injection (18).

2. Unité d'amortissement selon la revendication 1, **caractérisée en ce que** l'au moins une cavité (14) est ménagée au moins en partie le long d'une direction circonférentielle (20) de l'élément de démarrage (12).

3. Unité d'amortissement selon l'une des revendications précédentes, **caractérisée en ce que** l'au moins une cavité (14) est au moins partiellement annulaire.

4. Unité d'amortissement selon l'une des revendications précédentes, **caractérisée par** au moins deux éléments de démarrage (12) qui sont prévus pour amortir au moins la vibration d'induit longitudinale du moteur électrique dans au moins un état de fonctionnement.

5. Unité d'amortissement selon l'une des revendications précédentes, **caractérisée en ce que** l'au moins un premier élément de moulage par injection (16) et l'au moins un deuxième élément de moulage par injection (18) sont reliés entre eux de manière au moins partiellement fixe.

6. Unité d'amortissement selon l'une des revendications précédentes, **caractérisée en ce que** l'au moins un premier élément de moulage par injection (16) et l'au moins un deuxième élément de moulage par injection (18) sont conçus au moins partiellement d'une seule pièce".

7. Unité d'amortissement selon l'une des revendications précédentes, **caractérisée en ce que** l'au moins un élément de démarrage (12) comprend au moins une région de contact (22, 24) traitée aux ultrasons entre l'au moins un premier élément de moulage par injection (16) et l'au moins un deuxième élément de moulage par injection (18).

8. Unité d'amortissement selon l'une des revendications précédentes, **caractérisée en ce que** l'au moins une cavité (14) est au moins sensiblement étanche à l'air au moins dans un état monté.

9. Unité d'amortissement selon l'une des revendications précédentes, **caractérisée en ce que** l'au moins un premier élément de moulage par injection (16) et l'au moins un deuxième élément de moulage par injection (18) sont formés au moins en partie du même matériau.

10. Unité d'amortissement selon l'une des revendications précédentes, **caractérisée en ce que** l'au moins un élément de denture (26) est formé au moins partiellement d'une seule pièce avec l'au moins un premier élément de moulage par injection (16) ou l'au moins un deuxième élément de moulage par injection (18) .

11. Moteur électrique comprenant au moins un arbre d'induit (28), au moins un élément d'induit (30), au moins un commutateur (32), au moins un premier élément de palier (34) et au moins un deuxième élément de palier (36) et une unité d'amortissement (10) selon l'une des revendications précédentes qui est disposée sur l'arbre d'induit (30) au moins partiellement entre l'au moins un premier élément de palier (34) et l'au moins un élément d'induit (30) et/ou au moins partiellement entre l'au moins un commutateur (23) et l'au moins un deuxième élément de palier (36).

12. Procédé de fabrication d'une unité d'amortissement (10) selon l'une des revendications 1 à 10, **caractérisé par** au moins une étape (38, 40) dans laquelle au moins un élément de démarrage (12) de l'unité d'amortissement (10) est au moins partiellement formé dans un procédé de moulage par injection en au moins 2 étapes.

13. Procédé selon la revendication 12, **caractérisé par** au moins une autre étape (42) dans laquelle l'au moins un élément de démarrage (12) est traité au moins partiellement au moyen d'un procédé de soudage par ultrasons.

14. Procédé au moins selon la revendication 12, **caractérisé par** au moins une autre étape (44) dans laquelle au moins une cavité (14), qui est ménagée dans au moins un premier élément de moulage par injection (16) ou dans au moins un deuxième élément de moulage par injection (18) de l'au moins un élément de démarrage (12), est au moins sensiblement fermée.
